(19) **Europäisches Patentamt**
**European Patent Office**
**Office européen des brevets**

(11) **EP 2 423 882 B1**

(12) **EUROPEAN PATENT SPECIFICATION**

(45) Date of publication and mention
of the grant of the patent:
**04.12.2013 Bulletin 2013/49**

(51) Int Cl.:
***G06T 11/60*** *(2006.01)*

(21) Application number: **11178823.8**

(22) Date of filing: **25.08.2011**

(54) **Methods and apparatuses for enhancing wallpaper display**

Verfahren und Vorrichtungen zur Verbesserung der Wallpaper-Anzeige

Procédés et appareils d'amélioration d'affichage d'image de fond

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2010 US 872606**

(43) Date of publication of application:
**29.02.2012 Bulletin 2012/09**

(73) Proprietor: **Nokia Corporation**
**02150 Espoo (FI)**

(72) Inventors:
• **Rainisto, Roope Aleksi**
**00530 Helsinki (FI)**
• **Romppainen, Jenni**
**00550 Helsinki (FI)**

• **Piitulainen, Hannele**
**33720 Tampere (FI)**

(74) Representative: **Potter Clarkson LLP**
**The Belgrave Centre**
**Talbot Street**
**Nottingham**
**NG1 5GG (GB)**

(56) References cited:
**EP-A1- 2 173 090     US-A- 5 548 692**

• **FREEMAN ET AL: "Automated cartographic text placement", PATTERN RECOGNITION LETTERS, ELSEVIER, AMSTERDAM, NL, vol. 26, no. 3, 1 February 2005 (2005-02-01), pages 287-297, XP025292485, ISSN: 0167-8655, DOI: 10.1016/J.PATREC.2004.10.023 [retrieved on 2005-02-01]**

**Description**

TECHNOLOGICAL FIELD

Example embodiments of the present invention relate generally to user interface technology and, more particularly, relate to methods and apparatuses for providing an enhanced wallpaper display.

BACKGROUND

The modern communications era has brought about a tremendous expansion of wireline and wireless networks. Wireless and mobile networking technologies have addressed related consumer demands, while providing more flexibility and immediacy of information transfer. Concurrent with the expansion of networking technologies, an expansion in computing power has resulted in development of affordable computing devices capable of taking advantage of services made possible by modern networking technologies. This expansion in computing power has led to a reduction in the size of computing devices and given rise to a new generation of mobile devices that are capable of performing functionality that only a few years ago required processing power that could be provided only by the most advanced desktop computers. Consequently, mobile computing devices having a small form factor have become ubiquitous and are used to access network applications and services by consumers of all socioeconomic backgrounds.

Modern mobile computing devices frequently have displays, which while still much smaller than a desktop display, have a relatively large surface area given the compact size of such mobile computing devices. Many of these displays are capable of displaying a rich color pallet, which may enable display of a feature rich user interface to a user. However, to date evolution of user interface technology for taking advantage of the display capabilities of modern mobile computing devices has not kept pace with the evolution of computing device capabilities.

EP 2173090 A1 teaches to select an insertion area for a logo or advertisement according to video content. The method aims at increased spatial and temporal visual impact of logo.

EP2173090 does not relate to the determination of a suitable wallpaper by comparing the significant regions of the wallpaper with the display position of graphic items.

BRIEF SUMMARY

Methods, apparatuses, and computer program products are herein provided for enhancing wallpaper display. Methods, apparatuses, and computer program products in accordance with various embodiments may provide several advantages to computing devices, content providers, and computing device users. Some example embodiments facilitate enhanced selection of wallpaper images. In this regard, some example embodiments provide automated recommendation and/or selection of a wallpaper image based at least in part on the arrangement of graphic items to be overlaid on the wallpaper image. For example, some example embodiments provide for determination of a wallpaper image, which when overlaid by one or more graphic items having defined display positions will not have a visually significant region obscured by a graphic item. Such embodiments may provide an enhanced user experience in that a wallpaper image selected based at least in part on the position of overlaid graphic items in accordance with some example embodiments may, when overlaid by the graphic items, provide a visually harmonious interface that is visually pleasing to a user. Some example embodiments utilize automated wallpaper selection techniques to provide dynamic or periodically rotating wallpapers wherein a wallpaper image may be automatically changed in accordance with a defined policy or schedule while ensuring that an automatically selected wallpaper is appropriate for display under overlying graphic items.

Further, some example embodiments provide for enhancement of a user interface based on image content of a wallpaper image. As an example, some example embodiments modify widgets overlying a wallpaper image based on the visual content of the wallpaper image. For example, some example embodiments provide widgets that may utilize information contained in a tagged region of an underlying wallpaper image to provide enhanced content determined based at least in part on the image content of the tagged region and/or on information included in the tag itself.

In a first example embodiment, a method is provided, which comprises determining a display position for each of at least one graphic item. The method of this example embodiment further comprises determining, for each respective candidate image of at least one candidate image, locations of any visually significant regions in the respective candidate image. The method of this example embodiment additionally comprises determining an image from the at least one candidate image at least in part by comparing the determined display positions of the at least one graphic item to the determined locations of the visually significant regions of the at least one candidate image.

In another example embodiment, an apparatus comprising at least one processor and at least one memory storing computer program code is provided. The at least one memory and stored computer program code are configured, with the at least one processor, to cause the apparatus of this example embodiment to at least determine a display position for each of at least one graphic item. The at least one memory and stored computer program code are configured, with the at least one processor, to further cause the apparatus of this example embodiment to determine, for each respective candidate image of at least one candidate image, locations of any visually significant regions in the respective candidate image. The at least one memory and stored computer program code are configured, with the at least one processor, to additionally cause the apparatus of this example embodiment to determine an image from the at least one candidate image at least in part by comparing the determined display positions of the at least one graphic item to the determined locations of the visually significant regions of the at least one candidate image.

In another example embodiment, a computer program product is provided. The computer program product of this example embodiment includes at least one computer-readable storage medium having computer-readable program instructions stored therein. The program instructions of this example embodiment comprise program instructions configured to determine a display position for each of at least one graphic item. The program instructions of this example embodiment further comprise program instructions configured to determine, for each respective candidate image of at least one candidate image, locations of any visually significant regions in the respective candidate image. The program instructions of this example embodiment also comprise program instructions configured to determine an image from the at least one candidate image at least in part by comparing the determined display positions of the at least one graphic item to the determined locations of the visually significant regions of the at least one candidate image.

In another example embodiment, an apparatus is provided that comprises means for determining a display position for each of at least one graphic item. The apparatus of this example embodiment further comprises means for determining, for each respective candidate image of at least one candidate image, locations of any visually significant regions in the respective candidate image. The apparatus of this example embodiment additionally comprises means for determining an image from the at least one candidate image at least in part by comparing the determined display positions of the at least one graphic item to the determined locations of the visually significant regions of the at least one candidate image to.

The above summary is provided merely for purposes of summarizing some example embodiments of the invention so as to provide a basic understanding of some aspects of the invention. Accordingly, it will be appreciated that the above described example embodiments are merely examples and should not be construed to narrow the scope of the invention in any way. It will be appreciated that the scope of the invention encompasses embodiments according to the appended claims.

BRIEF DESCRIPTION OF THE DRAWING(S)

Having thus described embodiments of the invention in general terms, reference will now be made to the accompanying drawings, which are not necessarily drawn to scale, and wherein:

FIG. 1 illustrates a block diagram of an apparatus for providing an enhanced wallpaper display according to an example embodiment;

FIG. 2 is a schematic block diagram of a mobile terminal according to an example embodiment;

FIG. 3 illustrates a system for providing an enhanced wallpaper display according to an example embodiment;

FIGs. 4a-b illustrate determination of the visually significant regions of an image according to an example embodiment;

FIGs. 5a-5b illustrate determination of a wallpaper image according to an example embodiment;

FIG. 6 illustrates a flowchart according to an example method for facilitating determination of a wallpaper image according to an example embodiment; and

FIG. 7 illustrates a flowchart according to an example method for providing an enhanced wallpaper display according to an example embodiment.

DETAILED DESCRIPTION

Some embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout.

As used herein, the terms "data," "content," "information" and similar terms may be used interchangeably to refer to data capable of being transmitted, received, displayed and/or stored in accordance with various example embodiments. Thus, use of any such terms should not be taken to limit the spirit and scope of the disclosure. Further, where a computing device is described herein to receive data from another computing device, it will be appreciated that the data may be received directly from the another computing device or may be received indirectly via one or more intermediary computing devices, such as, for example, one or more servers, relays, routers, network access points, base stations, and/or the like.

The term "computer-readable medium" as used herein refers to any medium configured to participate in providing information to a processor, including instructions for execution. Such a medium may take many forms, including, but not limited to a non-transitory computer-readable storage medium (e.g., non-volatile media, volatile media), and transmission media. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Examples of computer-readable media include a floppy disk, a flexible disk, hard disk, magnetic tape, any other magnetic medium, a compact disc read only memory (CD-ROM), compact disc compact disc-rewritable (CD-RW), digital versatile disc (DVD), Blu-Ray, any other optical medium, punch cards, paper tape, optical mark sheets, any other physical medium with patterns of holes or other optically recognizable indicia, a random access memory (RAM), a programmable read only memory (PROM), an erasable programmable read only memory (EPROM), a FLASH-EPROM, any other memory chip or cartridge, a carrier wave, or any other medium from which a computer can read. The term computer-readable storage medium is used herein to refer to any computer-readable medium except transmission media. However, it will be appreciated that where embodiments are  described to use a computer-readable storage medium, other types of computer-readable mediums may be substituted for or used in addition to the computer-readable storage medium in alternative embodiments.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

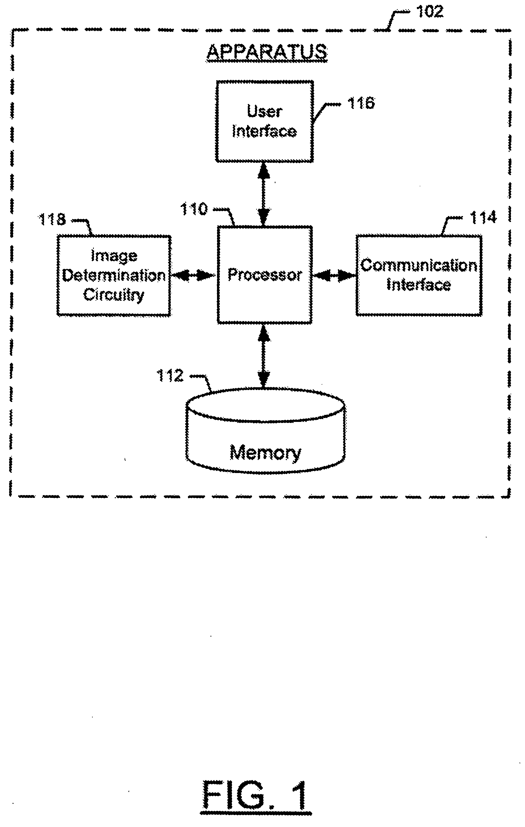

FIG. 1 illustrates a block diagram of an apparatus 102 for providing an enhanced wallpaper display according to an example embodiment. It will be appreciated that the apparatus 102 is provided as an example of one embodiment and should not be construed to narrow the scope or spirit of the invention in any way. In this regard, the scope of the disclosure encompasses many potential embodiments in addition to those illustrated and described herein. As such, while FIG. 1 illustrates one example of a configuration of an apparatus for providing an enhanced wallpaper display, other configurations may also be used to implement embodiments of the present invention.

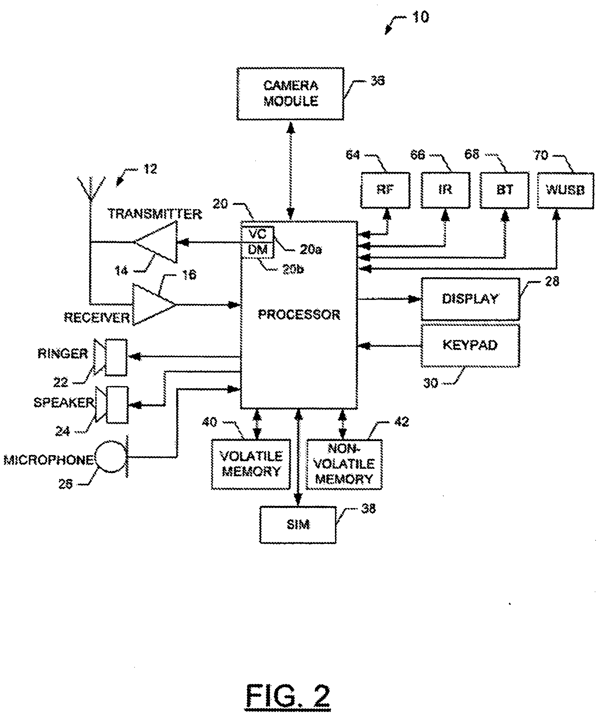

The apparatus 102 may be embodied as a desktop computer, laptop computer, mobile terminal, mobile computer, mobile phone, mobile communication device, one or more servers, one or more network nodes, game device, digital camera/camcorder, audio/video player, television device, radio receiver, digital video recorder, positioning device, chipset, a computing device comprising a chipset, any combination thereof, and/or the like. In this regard, the apparatus 102 may comprise any computing device or other apparatus that comprises a display and/or is in operative communication with a display  configured to display an image and one or more graphic items overlying the image. In an example embodiment, the apparatus 102 is embodied as a mobile computing device, such as a mobile terminal, such as that illustrated in FIG. 2.

In this regard, FIG. 2 illustrates a block diagram of a mobile terminal 10 representative of one embodiment of an apparatus 102. It should be understood, however, that the mobile terminal 10 illustrated and hereinafter described is merely illustrative of one type of apparatus 102 that may implement and/or benefit from various embodiments of the invention and, therefore, should not be taken to limit the scope of the disclosure. While several embodiments of the electronic device are illustrated and will be hereinafter described for purposes of example, other types of electronic devices, such as mobile telephones, mobile computers, portable digital assistants (PDAs), pagers, laptop computers, desktop computers, gaming devices, televisions, and other types of electronic systems, may employ various embodiments of the invention.

As shown, the mobile terminal 10 may include an antenna 12 (or multiple antennas 12) in communication with a transmitter 14 and a receiver 16. The mobile terminal 10 may also include a processor 20 configured to provide signals to and receive signals from the transmitter and receiver, respectively. The processor 20 may, for example, be embodied as various means including circuitry, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. Accordingly, although illustrated in FIG. 2 as a single processor, in some embodiments the processor 20 comprises a plurality of processors. These signals sent and received by the processor 20 may include signaling information in accordance with an air interface standard of an applicable cellular system, and/or any number of different wireline or wireless networking techniques, comprising but not limited to Wi-Fi, wireless local access network (WLAN) techniques such as Institute of Electrical and Electronics Engineers (IEEE) 802.11, 802.16, and/or the like. In addition, these signals may include speech data, user generated data, user requested data, and/or the like. In this regard, the mobile terminal may be capable of operating with one or more air interface standards, communication protocols, modulation types, access types, and/or the like. More particularly, the mobile terminal may be capable of operating in accordance with various first generation (1G), second generation (2G), 2.5G, third-generation (3G) communication protocols, fourth-generation (4G) communication protocols, Internet Protocol Multimedia Subsystem (IMS) communication protocols (e.g., session initiation protocol (SIP)), and/or the like. For example, the mobile terminal may be capable of operating in accordance with 2G wireless communication protocols IS-136 (Time Division Multiple Access (TDMA)), Global System for Mobile communications (GSM), IS-95 (Code Division Multiple Access (CDMA)), and/or the like. Also, for example, the mobile terminal may be capable of operating in accordance with 2.5G wireless communication protocols General Packet Radio Service (GPRS), Enhanced Data GSM Environment (EDGE), and/or the like. Further, for example, the mobile terminal may be capable of operating in accordance with 3G wireless communication protocols such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The mobile terminal may be additionally capable of operating in accordance with 3.9G wireless communication protocols such as Long Term Evolution (LTE) or Evolved Universal Terrestrial Radio Access Network (E-UTRAN) and/or the like. Additionally, for example, the mobile terminal may be capable of operating in accordance with fourth-generation (4G) wireless communication protocols and/or the like as well as similar wireless communication protocols that may be developed in the future.

Some Narrow-band Advanced Mobile Phone System (NAMPS), as well as Total Access Communication System (TACS), mobile terminals may also benefit from embodiments of this invention, as should dual or higher mode phones (e.g., digital/analog or TDMA/CDMA/analog phones). Additionally, the mobile terminal 10 may be capable of operating according to Wi-Fi or Worldwide Interoperability for Microwave Access (WiMAX) protocols.

It is understood that the processor 20 may comprise circuitry for implementing audio/video and logic functions of the mobile terminal 10. For example, the processor 20 may comprise a digital signal processor device, a microprocessor device, an analog-to-digital converter, a digital-to-analog converter, and/or the like. Control and signal processing functions of the mobile terminal may be allocated between these devices according to their respective capabilities. The processor may additionally comprise an internal voice coder (VC) 20a, an internal data modem (DM) 20b, and/or the like. Further, the processor may comprise functionality to operate one or more software programs, which may be stored in memory. For example, the processor 20 may be capable of operating a connectivity program, such as a web browser. The connectivity program may allow the mobile terminal 10 to transmit and receive web content, such as location-based content, according to a protocol, such as Wireless Application Protocol (WAP), hypertext transfer protocol (HTTP), and/or the like. The mobile terminal 10 may be capable of using a Transmission Control Protocol/Internet Protocol (TCP/IP) to transmit and receive web content across the internet or other networks.

The mobile terminal 10 may also comprise a user interface including, for example, an earphone or speaker 24, a ringer 22, a microphone 26, a display 28, a user input interface, and/or the like, which may be operationally coupled to the processor 20. In this regard, the processor 20 may comprise user interface circuitry configured to control at least some functions of one or more elements of the user interface, such as, for example, the speaker 24, the ringer 22, the microphone 26, the display 28, and/or the like. The processor 20 and/or user interface circuitry comprising the processor 20 may be configured to control one or more functions of one or more elements of the user interface through computer program instructions (e.g., software and/or firmware) stored on a memory accessible to the processor 20 (e.g., volatile memory 40, non-volatile memory 42, and/or the like). Although not shown, the mobile terminal may comprise a battery for powering various circuits related to the mobile terminal, for example, a circuit to provide mechanical vibration as a detectable output. The display 28 of the mobile terminal may be of any type appropriate for the electronic device in question with some examples including a plasma display panel (PDP), a liquid crystal display (LCD), a light-emitting diode (LED), an organic light-emitting diode display (OLED), a projector, a holographic display or the like. The user input interface may comprise devices allowing the mobile terminal to receive data, such as a keypad 30, a touch display (not shown), a joystick (not shown), and/or other input device. In embodiments including a keypad, the keypad may comprise numeric (0-9) and related keys (#, *), and/or other keys for operating the mobile terminal.

As shown in FIG. 2, the mobile terminal 10 may also include one or more means for sharing and/or obtaining data. For example, the mobile terminal may comprise a short-range radio frequency (RF) transceiver and/or interrogator 64 so data may be shared with and/or obtained from electronic devices in accordance with RF techniques. The mobile terminal may comprise other short-range transceivers, such as, for example, an infrared (IR) transceiver 66, a Bluetooth™ (BT) transceiver 68 operating using Bluetooth™ brand wireless technology developed by the Bluetooth™ Special Interest Group, a wireless universal serial bus (USB) transceiver 70 and/or the like. The Bluetooth™ transceiver 68 may be capable of operating according to ultra-low power Bluetooth™ technology (e.g., Wibree™) radio standards. In this regard, the mobile terminal 10 and, in particular, the short-range transceiver may be capable of transmitting data to and/or receiving data from electronic devices within a proximity of the mobile terminal, such as within 10 meters, for example. Although not shown, the mobile terminal may be capable of transmitting and/or receiving data from electronic devices according to various wireless networking techniques, including Wi-Fi), WLAN techniques such as IEEE 802.11 techniques, IEEE 802.15 techniques, IEEE 802.16 techniques, and/or the like.

In an example embodiment, the mobile terminal 10 may include a media capturing element, such as a camera, video and/or audio module, in communication with the processor 20. The media capturing element may be any means for capturing an image, video and/or audio for storage, display or transmission. For example, in an example embodiment in which the media capturing element is a camera module 36, the camera module 36 may include a digital camera capable of forming a digital image file from a captured image. In addition, the digital camera of the camera module 36 may be capable of capturing a video clip. As such, the camera module 36 may include all hardware, such as a lens or other optical component(s), and software necessary for creating a digital image file from a captured image as well as a digital video file from a captured video clip. Alternatively, the camera module 36 may include only the hardware needed to view an image, while a memory device of the mobile terminal 10 stores instructions for execution by the processor 20 in the form of software necessary to create a digital image file from a captured image. As yet another alternative, an object or objects within a field of view of the camera module 36 may be displayed on the display 28 of the mobile terminal 10 to illustrate a view of an image currently displayed which may be captured if desired by the user. As such, as referred to hereinafter, an image may be either a captured image or an image comprising the object or objects currently displayed by the mobile terminal 10, but not necessarily captured in an image file. In an example embodiment, the camera module 36 may further include a processing element such as a co-processor which assists the processor 20 in processing image data and an encoder and/or decoder for compressing and/or decompressing image data. The encoder and/or decoder may encode and/or decode according to, for example, a j oint photographic experts group (JPEG) standard, a moving picture experts group (MPEG) standard, or other format.

The mobile terminal 10 may comprise memory, such as a subscriber identity module (SIM) 38, a removable user identity module (R-UIM), and/or the like, which may store information elements related to a mobile subscriber. In addition to the SIM, the mobile terminal may comprise other removable and/or fixed memory. The mobile terminal 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices (e.g., hard disks, floppy disk drives, magnetic tape, etc.), optical disc drives and/or media, non-volatile random access memory (NVRAM), and/or the like. Like volatile memory 40 non-volatile memory 42 may include a cache area for temporary storage of data. The memories may store one or more software programs, instructions, pieces of information, data, and/or the like which may be used by the mobile terminal for performing functions of the mobile terminal. For example, the memories may comprise an identifier, such as an international mobile equipment identification (IMEI) code, capable of uniquely identifying the mobile terminal 10.

Returning to FIG. 1, in an example embodiment, the apparatus 102 includes various means for performing the various functions herein described. These means may comprise one or more of a processor 110, memory 112, communication interface 114, user interface 116, or image determination circuitry 118. The means of the apparatus 102 as described herein may be embodied as, for example, circuitry, hardware elements (e.g., a suitably programmed processor, combinational logic circuit, and/or the like), a computer program product comprising computer-readable program instructions (e.g., software or firmware) stored on a computer-readable medium (e.g. memory 112) that is executable by a suitably configured processing device (e.g., the processor 110), or some combination thereof.

In some example embodiments, one or more of the means illustrated in FIG. 1 may be embodied as a chip or chip set. In other words, the apparatus 102 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. In this regard, the processor 110, memory 112, communication interface 114, user interface 116, and/or image determination circuitry 118 may be embodied as a chip or chip set. The apparatus 102 may therefore, in some cases, be configured to or may comprise component(s) configured to implement embodiments of the present invention on a single chip or as a single "system on a chip." As such, in some cases, a chip or chipset may constitute means for performing one or more operations for providing the functionalities described herein and/or for enabling user interface navigation with respect to the functionalities and/or services described herein.

The processor 110 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. Accordingly, although illustrated in FIG. 1 as a single processor, in some embodiments the processor 110 comprises a plurality of processors. The plurality of processors may be in operative communication with each other and may be collectively configured to perform one or more functionalities of the apparatus 102 as described herein. The plurality of processors may be embodied on a single computing device or distributed across a plurality of computing devices collectively configured to function as the apparatus 102. In embodiments wherein the apparatus 102 is embodied as a mobile terminal 10, the processor 110 may be embodied as or comprise the processor 20. In some example embodiments, the processor 110 is configured to execute instructions stored in the memory 112 or otherwise accessible to the processor 110. These instructions, when executed by the processor 110, may cause the apparatus 102 to perform one or more of the functionalities of the apparatus 102 as described herein. As such, whether configured by hardware or software methods, or by a combination thereof, the processor 110 may comprise an entity capable of performing operations according to embodiments of the present invention while configured accordingly. Thus, for example, when the processor 110 is embodied as an ASIC, FPGA or the like, the processor 110 may comprise specifically configured hardware for conducting one or more operations described herein. Alternatively, as another example, when the processor 110 is embodied as an executor of instructions, such as may be stored in the memory 112, the instructions may specifically configure the processor 110 to perform one or more algorithms and operations described herein.

The memory 112 may comprise, for example, volatile memory, non-volatile memory, or some combination thereof. In this regard, the memory 112 may comprise a non-transitory computer-readable storage medium. Although illustrated in FIG. 1 as a single memory, the memory 112 may comprise a plurality of memories. The plurality of memories may be embodied on a single computing device or may be distributed across a plurality of computing devices collectively configured to function as the apparatus 102. In various example embodiments, the memory 112 may comprise a hard disk, random access memory, cache memory, flash memory, a compact disc read only memory (CD-ROM), digital versatile disc read only memory (DVD-ROM), an optical disc, circuitry configured to store information, or some combination thereof. In embodiments wherein the apparatus 102 is embodied as a mobile terminal 10, the memory 112 may comprise the volatile memory 40 and/or the non-volatile memory 42. The memory 112 may be configured to store information, data, applications, instructions, or the like for enabling the apparatus 102 to carry out various functions in accordance with various example embodiments. For example, in some example embodiments, the memory 112 is configured to buffer input data for processing by the processor 110. Additionally or alternatively, the memory 112 may be configured to store program instructions for execution by the processor 110. The memory 112 may store information in the form of static and/or dynamic information. The stored information may include, for example, images, information about images, and/or the like. This stored information may be stored and/or used by the image determination circuitry 118 during the course of performing its functionalities.

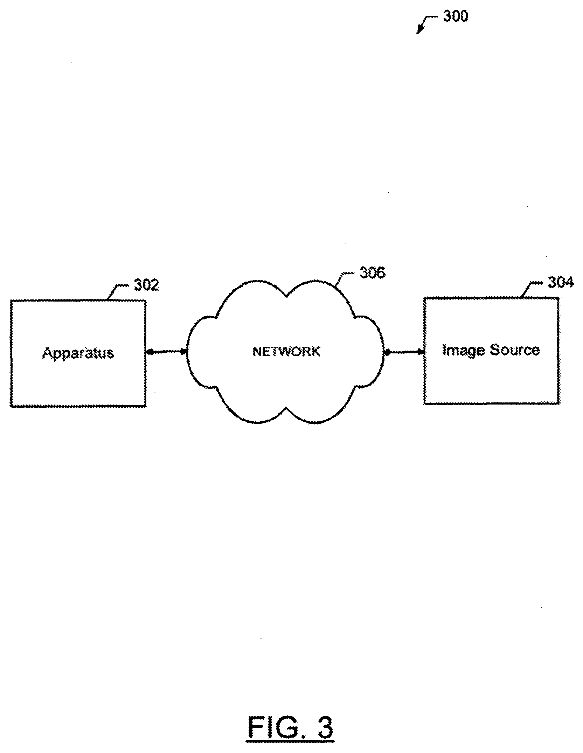

The communication interface 114 may be embodied as any device or means embodied in circuitry, hardware, a computer program product comprising computer readable program instructions stored on a computer readable medium (e.g., the memory 112) and executed by a processing device (e.g., the processor 110), or a combination thereof that is configured to receive and/or transmit data from/to another computing device. In an example embodiment, the communication interface 114 is at least partially embodied as or otherwise controlled by the processor 110. In this regard, the communication interface 114 may be in communication with the processor 110, such as via a bus. The communication interface 114 may include, for example, an antenna, a transmitter, a receiver, a transceiver and/or supporting hardware or software for enabling communications with one or more remote computing devices. The communication interface 114 may be configured to receive and/or transmit data using any protocol that may be used for communications between computing devices. In this regard, the communication interface 114 may be configured to receive and/or transmit data using any protocol that may be used for transmission of data over a wireless network, wireline network, some combination thereof, or the like by which the apparatus 102 and one or more computing devices are in communication. As an example, the communication interface 114 may be configured to receive and/or otherwise access web page content and/or other content over a network (e.g., the network 306 illustrated in FIG. 3) from a server or other content source (e.g., the image source 304). The communication interface 114 may additionally be in communication with the memory 112, user interface 116, and/or image determination circuitry 118, such as via a bus.

The user interface 116 may be in communication with the processor 110 to receive an indication of a user input and/or to provide an audible, visual, mechanical, or other output to a user. As such, the user interface 116 may include, for example, a keyboard, a mouse, a joystick, a display, a touch screen display, a microphone, a speaker, and/or other input/output mechanisms. In embodiments wherein the user interface 116 comprises a touch screen display, the user interface 116 may additionally be configured to detect and/or receive indication of a touch gesture or other input to the touch screen display. The user interface 116 may be in communication with the memory 112, communication interface 114, and/or image determination circuitry 118, such as via a bus.

The image determination circuitry 118 may be embodied as various means, such as circuitry, hardware, a computer program product comprising computer readable program instructions stored on a computer readable medium (e.g., the memory 112) and executed by a processing device (e.g., the processor 110), or some combination thereof and, in some embodiments, is embodied as or otherwise controlled by the processor 110. In embodiments wherein the image determination circuitry 118 is embodied separately from the processor 110, the image determination circuitry 118 may be in communication with the processor 110. The image determination circuitry 118 may further be in communication with one or more of the memory 112, communication interface 114, or user interface 116, such as via a bus.

FIG. 3 illustrates a system 300 for providing an enhanced wallpaper display according to an example embodiment of the invention. The system 300 may comprise an apparatus 302 and an image source 304 configured to communicate over the network 306. The apparatus 302 may, for example, comprise an embodiment of the apparatus 102 wherein the apparatus 102 is configured to communicate with a remote image source 304 over a network 306 to access an image available from the image source 304. The accessed image may, for example, be considered a candidate image for use as a wallpaper image and/or used as a wallpaper image by the apparatus 102. The image source 304 may comprise any computing device configured to provide an image and/or data about an image, such as data about visually significant image regions, to the apparatus 302 over the network 306. In this regard, the image source 304 may comprise, for example, a network attached storage device, a server, a desktop computer, laptop computer, mobile terminal, mobile computer, mobile phone, mobile communication device, audio/video player, any combination thereof, and/or the like that is configured to provide and/or otherwise share content with the apparatus 302. The network 306 may comprise a wireline network, wireless network (e.g., a cellular network, wireless local area network, wireless wide area network, some combination thereof, or the like), or a combination thereof, and in one embodiment comprises the internet.

Accordingly, it will be appreciated that an image, such as a candidate image, described to be analyzed, determined, selected, and/or the like in accordance with various embodiments disclosed herein may comprise an image received, obtained, and/or accessed by the apparatus 102 from an image source 304 over a network 306. Additionally or alternatively, the image may comprise an image that is locally stored at the apparatus 302, such as in the memory 112.

In some example embodiments, the image determination circuitry 118 is configured to determine a display position for one or more graphic items to be displayed overlying a wallpaper image. In this regard, the wallpaper image and graphic items may collectively comprise a desktop user interface for a computing device, a home screen for a computing device, and/or the like. The graphic items may comprise an icon, such as may be used to launch an application or service, a widget, an application interface, a service interface, and/or the like. A display position of a graphic item may comprise a relative position to another item, an absolute position (e.g., a coordinate of the item defining a position of the item on a display area), some combination thereof, or the like. Further, the display position of a graphic item may comprise a position of a point, such as may define a position where the center of the item is displayed, or may comprise a position describing the boundaries of a region in which the item is displayed (e.g., a set of coordinates defining the boundaries of a display area occupied by display of the graphic item).

The display position of a graphic item may, for example, be defined by a user defined arrangement of one or more graphic items. Alternatively, the display position of a graphic item may be defined based on an automated arrangement of one or more graphic items within a display space. As yet another example, the display position of a graphic item may be defined based on the specifications of an application with which the graphic item is associated, on the basis of the display positions of one or more other graphic items, and/or the like.

The image determination circuitry 118 may be further configured to access at least one candidate image that may, if selected, be used as a wallpaper image underlying one or more graphic items at their determined defined positions. The at least one candidate image may, for example, be locally available, such as from the memory 112. As an example, a candidate image may comprise an image captured by a digital camera embodied on or in operative communication with the apparatus 102, such as, the camera module 36. Additionally or alternatively, the image determination circuitry 118 may access a candidate image available from an image source 304 via the network 306. In this regard, a candidate image may be accessed from an online image collection, repository, gallery, social network site, and/or the like. An image accessed from such an online source may be freely available or may, for example be available for a fee from a vender selling an image and/or the right to use an image. Thus, where appropriate, the image determination circuitry 118 may be configured to authorize remission of payment to an image provider and/or prompt a user of the apparatus 102 to remit payment to an image provider for download and/or usage of an image as a wallpaper image.

The image determination circuitry 118 may be further configured to determine for each respective candidate image of at least one accessed candidate image the locations of any visually significant regions in the candidate image. A visually significant region of an image may be defined as a region of an image of particular interest that may, for example, be distinguished from a mere background portion of the image. The visual content of a visually significant region may vary depending on the overall context of the image. However, by way of example, a visually significant region of an image including a boat in a lake may comprise the boat, while the water of the lake surrounding the boat may comprise a non-visually significant region. As a further example, a visually significant region of an image including a person posed in context of the environmental background may comprise the person, while the background may comprise a non-visually significant region.

As such, the image determination circuitry 118 may be configured to analyze the image content of a candidate image to identify the visually significant regions, if any, in the candidate image, and the locations thereof. For example, the image determination circuitry 118 may be configured to apply an energy function to an image. The energy function applied to an image may comprise any appropriate energy function. For example, the energy function applied to an image may be defined as:

$$e(I) = \left| \frac{\partial}{\partial x} I \right| + \left| \frac{\partial}{\partial y} I \right| \qquad\qquad (1)$$

where $I$ is the image. An image may be divided into a plurality of portions, such as pixels. An energy level of each such portion of an image may be determined by application of an energy function to the image. As such, the image determination circuitry 118 may be configured to determine a region of an image having one or more portions (e.g., pixels) having an energy level greater than a predefined threshold to be a visually significant region.

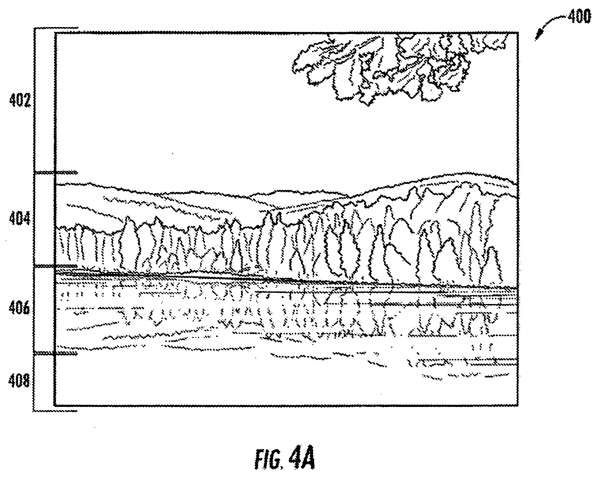

Referring to FIG. 4a, FIG. 4a illustrates an example image 400 to which an energy function may be applied. For purposes of this example, the image 400 has been divided into four regions, labeled 402, 404, 406, and 408. It will be appreciated, however, that this example division of the image 400 into the four labeled regions is merely for purposes of providing a simplified example of the determination of visually significant regions, as in reality, each of the labeled regions of the image 400 may be divided into several smaller regions, which may have varying degrees of visual significance. Referring to the image 400, a region 402 may comprise an image of a skyline over the peaks of a mountain range. The region 404 may comprise the tree line and mountain peaks visible on a horizon. The region 406 may comprise the reflection of the tree line and mountain peaks into a portion of a lake. The region 408 may comprise the waters of a portion of the lake which is not reflecting the tree line or mountain peaks. An individual viewing the image 400 may regard the regions 404 and 406 as being visually significant. However, the regions 402 and 408 may be regarded as being relatively visually insignificant in comparison to the regions 404 and 406, as the regions 402 and 408 mainly serve as background regions providing context to the visually significant regions 404 and 406.

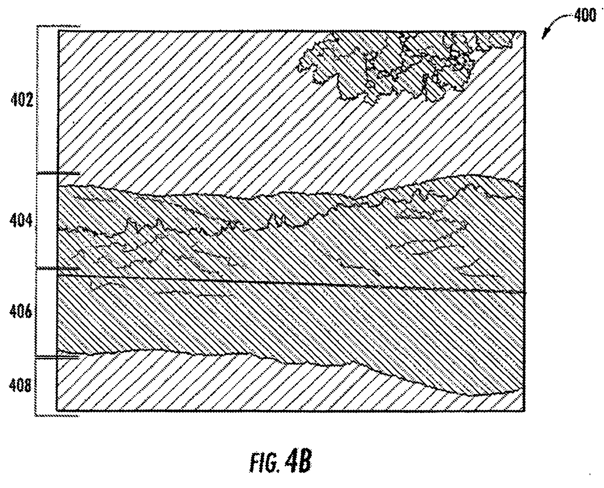

Referring now to FIG. 4b, FIG. 4b shows the results of application of an example energy function to the image 400. In this regard, the level of shading of a region of the image 400 in FIG. 4b represents the level of energy of the region. More particularly, the darker the shading, the higher the energy level of the region. As seen in FIG. 4b, the regions 404 and 406 are shaded darker than the regions 402 and 408. Accordingly, through application of the energy function to the image 400, the image determination circuitry 118 may be configured to determine that the regions 404 and 406 are visually significant regions. In view of the foregoing discussion of the impression of the image 400 that an individual viewing the image would have, these results of the energy function are in line with that which is expected.

As another example, the image determination circuitry 118 may be configured to analyze the homogeneity of an image. For example, the image determination circuitry 118 may be configured to analyze neighboring portions (e.g., pixels) of an image to determine the variation between a portion and its neighboring portions with respect to brightness, contrast, hue, color level, and/or the like. A region of an image having less than a predefined level of homogeneity may be regarded by the image determination circuitry 118 as a visually significant image. In this regard, background regions of an image, such as grass, sky, water, or the like may have a large degree of homogeneity. Accordingly, the level of homogeneity of a region of an image may serve as an indicator of the visual significance of the region. Returning to the image 400, the appearance of the regions 402 and 408 may be regarded as significantly more homogenous than regions 404 and 406.

The image determination circuitry 118 may be configured to analyze the homogeneity of a candidate image, apply an energy function to a candidate image, and/or the like when determining the locations of visually significant regions of the candidate image. Alternatively, a candidate image may have been pre-analyzed and the results of analysis (e.g., the results of application of an energy function to an image, analysis of the homogeneity of an image, and/or the like) may be stored in association with the image. Accordingly, the image determination circuitry 118 may be configured to access the results of a prior analysis of a candidate image in order to determine the locations of any visually significant regions in the candidate image.

The image determination circuitry 118 may additionally or alternatively be configured to determine the locations of any visually significant regions of a candidate image by determining tagged regions of the candidate image. In this regard, one or more regions of a candidate image may be tagged, such as through meta-tagging. A tag may additionally carry information about the tagged region. This information may, for example, identify the visual content of the tagged region and/or otherwise provide information related to the visual content of the tagged region.

The image determination circuitry 118 may be further configured to determine an image from the at least one candidate image that is suitable for use as a wallpaper image underlying the at least one graphic item. In this regard, the image determination circuitry 118 may be configured to compare the determined display positions of the at least one graphic item to the determined locations of the visually significant regions of the at least one candidate image to determine a candidate image (e.g., a best candidate image) from the at least one candidate image. As an example, the image determination circuitry 118 may determine a candidate image that does not have a visually significant region obscured by a graphic item when overlaid by the at least one graphic item at their respective display positions. Alternatively, such as in an instance in which each of the considered candidate images has at least one visually significant region obscured by a graphic item, the image determination circuitry 118 may determine a candidate image has the fewest number of visually significant regions obscured by a graphic item(s) when overlaid by the at least one graphic item at the determined display positions. As still another example, the image determination circuitry 118 may determine the candidate image that has the least surface area of visually significant regions (e.g., smallest percentage of total surface area of visually significant regions in the image, smallest total surface area of visually significant regions in the image, and/or the like) obscured by a graphic item(s) when overlaid by the at least one graphic item at the determined display positions.

It will be appreciated that a graphic item may overlap a visually significant region to a certain extent without obscuring the visually significant region. In this regard, an area covered by a graphic item may encroach upon an underlying visually significant region without obscuring the visually significant region. However, if the graphic item substantially overlaps (e.g., substantially covers) a visually significant region such that the visually significant region is substantially not visible or is not discernible, the graphic item may be regarded as obscuring the significant region. Accordingly, the image determination circuitry 118 may review one or more candidate images to determine one that, given the defined display positions of one or more graphic items, may be visually appeasing when displayed as a wallpaper image underlying the graphic items.

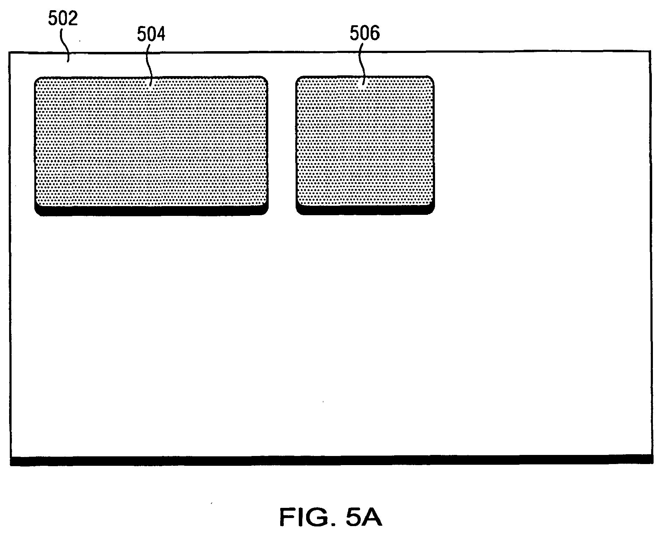

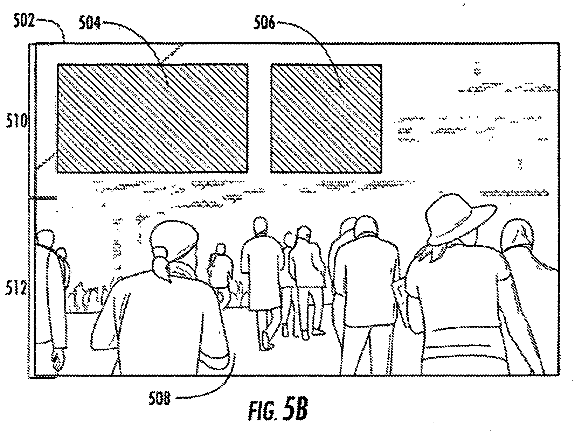

Referring now to FIG. 5, FIG. 5 illustrates determination of a wallpaper image according to an example embodiment. In this regard, FIG. 5a illustrates graphic items 504 and 506 at defined display positions within a display area 502. As illustrated, the positions of the graphic items 504 and 506 are substantially disposed in the upper portion of the display area of 502. The image determination circuitry 118 may accordingly factor in the display positions of the graphic items 504 and 506 when determining a suitable wallpaper image for display underlying the graphic items 504 and 506 in the display area 502. Referring now to FIG. 5b, an example of an image 508 that may be determined to be suitable for use as a wallpaper image underlying the graphic items 504 and 506 is illustrated. In this regard, the image 508 illustrates several people disposed in the lower half of the image with the upper half of the image depicting background visual content. Accordingly, the visually significant regions of the image 508 may be regarded as being substantially confined to the lower half of the image such that the graphic items 504 and 506 do not substantially obscure a visually significant region of the image 508 when overlaid on the image 508.

In some embodiments, the image determination circuitry 118 may be configured to automatically cause display as a wallpaper image of a candidate image determined to be a suitable wallpaper image. For example, the image determination circuitry 118 may be configured based on a user setting, manufacturer setting, and/or the like to automatically select a candidate image for use as a wallpaper image. As another example, the image determination circuitry 118 may be configured to cause one or more candidate images determined to be suitable for use as a wallpaper image underlying one or more graphic items at defined display positions to be presented to a user as suggested wallpaper images. The user may accordingly select a candidate image for use as a wallpaper image from the suggested wallpaper images and the image determination circuitry 118 may cause display of the selected candidate image as a wallpaper image.

In various embodiments, the image determination circuitry 118 may be configured to determine a candidate image that is suitable for use as a wallpaper image in response to a user request, determination of an occurrence of a predefined event, and/or the like. For example, the image determination circuitry 118 may detect a change in a position of a graphic item overlying a wallpaper image, which may result in a new arrangement of one or more graphic items overlying the wallpaper image. A visually significant region of a wallpaper image that was not obscured prior to the change may be obscured by the graphic item subsequent to the position change. The image determination circuitry 118 may accordingly be configured to determine a candidate image that is suitable for use as a wallpaper image underlying the new arrangement of one or more graphic items in response to detecting the position change.

As another example, the image determination circuitry 118 may be configured to provide a dynamic wallpaper animation feature and/or periodically change a wallpaper image. For example, the image determination circuitry 118 may be configured to change a wallpaper image daily. As such, the image determination circuitry 118 may be configured to determine that a current wallpaper image has been displayed for a predefined period of time. Responsive to the determination, the image determination circuitry 118 may determine a suitable new wallpaper image from a pool of at least one candidate image and replace the current wallpaper image with the new wallpaper image.

Some example embodiments provide for enhancement of a graphic item based on the visual content of an underlying wallpaper image. For example, the image determination circuitry 118 may be configured to modify the content of a widget based at least in part on the content of an underlying wallpaper image. As an example, the wallpaper image may include one or more tagged regions. The image determination circuitry 118 may be configured to determine information from the tagged region and modify the content of a widget based on the determined information. More particularly, the image determination circuitry 118 may analyze a tagged region to determine information about the visual content of the tagged region, determine information from the tag, and/or the like to use as the basis for modifying content of a widget. The widget may be configured to access information from a social networking site and a tagged region of a wallpaper image may depict a person. Accordingly, information may be accessed from the social networking site about the person depicted in the tagged region and the widget may be modified on the basis of the information accessed from the social networking site.

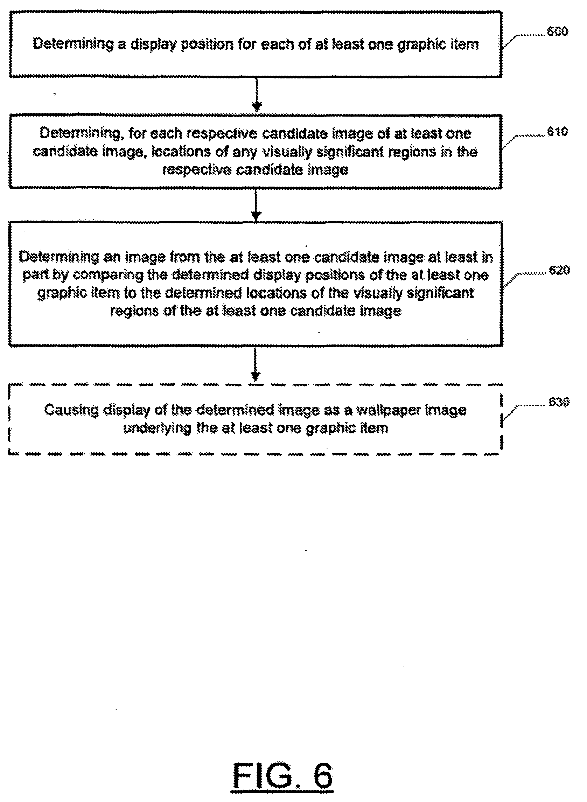

FIG. 6 illustrates a flowchart according to an example method for facilitating determination of a wallpaper image according to an example embodiment. The operations illustrated in and described with respect to FIG. 6 may, for example, be performed by, with the assistance of, and/or under the control of one or more of the processor 110, memory 112, communication interface 114, user interface 116, or image determination circuitry 118. Operation 600 may comprise determining a display position for each of at least one graphic item. The processor 110, memory 112, and/or image determination circuitry 118 may, for example, provide means for performing operation 600. Operation 610 may comprise determining, for each respective candidate image of at least one candidate image locations of any visually significant regions, in the respective candidate image. The processor 110, memory 112, and/or image determination circuitry 118 may, for example, provide means for performing operation 610. Operation 620 may comprise determining an image from the at least one candidate image (e.g., a best candidate image) at least in part by comparing the determined display positions of the at least one graphic item to the determined locations of the visually significant regions. In this regard, operation 620 may, for example, comprise determining a candidate image that does not have a visually significant region obscured by a graphic item when overlaid by the at least one graphic item at the determined display positions. As another example, operation 620 may comprise determining the candidate image from the at least one candidate image that has the fewest number of visually significant regions obscured by a graphic item(s) when overlaid by the at least one graphic item at the determined display positions. As still a further example, operation 620 may comprise determining the candidate image from the at least one candidate image that has the least surface area of visually significant regions (e.g., smallest percentage of total surface area of visually significant regions in the image, smallest total surface area of visually significant regions in the image, and/or the like) obscured by a graphic item(s) when overlaid by the at least one graphic item at the determined display positions. The processor 110, memory 112, and/or image determination circuitry 118 may, for example, provide means for performing operation 620.

The method may optionally further include operation 630, which may comprise causing display of the determined image as a wallpaper image underlying the at least one graphic item. The processor 110, memory 112, image determination circuitry 118, and/or user interface 116 may, for example, provide means for performing operation 630.

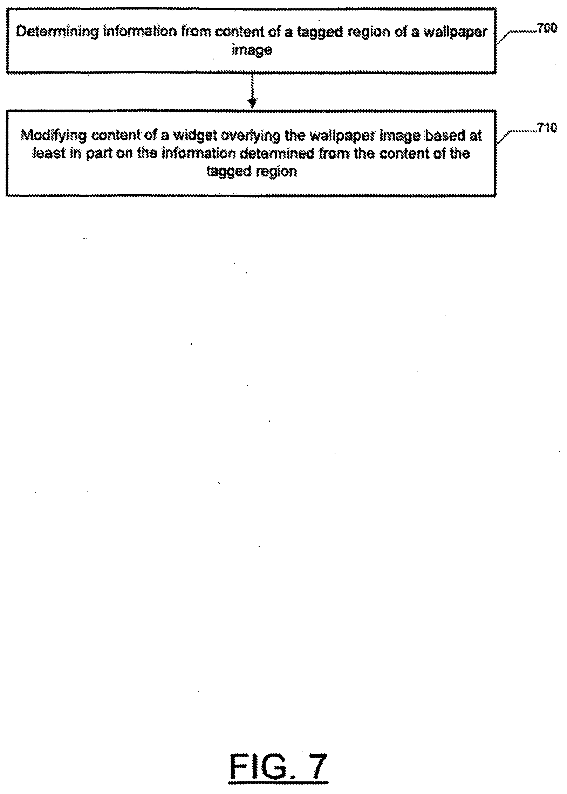

FIG. 7 illustrates a flowchart according to an example method for providing an enhanced wallpaper display according to an example embodiment. The operations illustrated in and described with respect to FIG. 7 may, for example, be performed by, with the assistance of, and/or under the control of one or more of the processor 110, memory 112, communication interface 114, user interface 116, or image determination circuitry 118. Operation 700 may comprise determining information from content of a tagged region of a wallpaper image. The determined information may, for example, be determined from visual analysis of the tagged region, from metadata or other information provided by the tag, and/or the like. The processor 110, memory 112, and/or image determination circuitry 118 may, for example, provide means for performing operation 700. Operation 710 may comprise modifying content of a widget overlying the wallpaper image based at least in part on the information determined in operation 700. The processor 110, memory 112, and/or image determination circuitry 118 may, for example, provide means for performing operation 700.

FIGs. 6-7 each illustrate a flowchart of a system, method, and computer program product according to an example embodiment. It will be understood that each block of the flowcharts, and combinations of blocks in the flowcharts, may be implemented by various means, such as hardware and/or a computer program product comprising one or more computer-readable mediums having computer readable program instructions stored thereon. For example, one or more of the procedures described herein may be embodied by computer program instructions of a computer program product. In this regard, the computer program product(s) which embody the procedures described herein may be stored by one or more memory devices of a mobile terminal, server, or other computing device (for example, in the memory 112) and executed by a processor in the computing device (for example, by the processor 110). In some embodiments, the computer program instructions comprising the computer program product(s) which embody the procedures described above may be stored by memory devices of a plurality of computing devices. As will be appreciated, any such computer program product may be loaded onto a computer or other programmable apparatus (for example, an apparatus 102) to produce a machine, such that the computer program product including the instructions which execute on the computer or other programmable apparatus creates means for implementing the functions specified in the flowchart block(s). Further, the computer program product may comprise one or more computer-readable memories on which the computer program instructions may be stored such that the one or more computer-readable memories can direct a computer or other programmable apparatus to function in a particular manner, such that the computer program product comprises an article of manufacture which implements the function specified in the flowchart block(s). The computer program instructions of one or more computer program products may also be loaded onto a computer or other programmable apparatus (for example, an apparatus 102) to cause a series of operations to be performed on the computer or other programmable apparatus to produce a computer-implemented process such that the instructions which execute on the computer or other programmable apparatus implement the functions specified in the flowchart block(s).

Accordingly, blocks of the flowcharts support combinations of means for performing the specified functions. It will also be understood that one or more blocks of the flowcharts, and combinations of blocks in the flowcharts, may be implemented by special purpose hardware-based computer systems which perform the specified functions, or combinations of special purpose hardware and computer program product(s).

The above described functions may be carried out in many ways. For example, any suitable means for carrying out each of the functions described above may be employed to carry out embodiments of the invention. In one embodiment, a suitably configured processor (for example, the processor 110) may provide all or a portion of the elements. In another embodiment, all or a portion of the elements may be configured by and operate under control of a computer program product. The computer program product for performing the methods of an example embodiment of the invention includes a computer-readable storage medium (for example, the memory 112), such as the non-volatile storage medium, and computer-readable program code portions, such as a series of computer instructions, embodied in the computer-readable storage medium.

Many modifications set forth herein will come to mind to one skilled in the art to which these inventions pertain having the benefit of the teachings presented in the foregoing descriptions and the associated drawings. Therefore, it is to be understood that the embodiments of the invention are not to be limited to the specific embodiments disclosed. Moreover, although the foregoing descriptions and the associated drawings describe example embodiments in the context of certain example combinations of elements and/or functions, it should be appreciated that different combinations of elements and/or functions may be provided. Although specific terms are employed herein, they are used in a generic and descriptive sense only and not for purposes of limitation.

**Claims**

1. A method comprising:

   determining a display position for each of at least one graphic item (600);
   determining, for each respective candidate image of at least one candidate image, locations of any visually significant regions in the respective candidate image (6-10); and
   determining an image from the at least one candidate image at least in part by comparing the determined display positions of the at least one graphic item to the determined locations of the visually significant regions of the at least one candidate image (620).

2. The method of claim 1, further comprising causing display of the determined image as a wallpaper image underlying the at least one graphic item.

3. The method of claim 2, wherein the wallpaper image includes a tagged region and the at least one graphic item comprises a widget, the method further comprising:

   modifying content of the widget based at least in part on the tagged region.

4. The method of any of claims 1 to 3, further comprising causing the determined image to be suggested to a user for use as a wallpaper image.

5. The method of any of claims 1 to 4, further comprising:

   detecting a change in a position of a graphic item of the at least one graphic item; and
   wherein determining the image comprises determining the image responsive to detection of the change in the position.

6. The method of any of claims 1 to 5 further comprising:

   determining that a current wallpaper image has been displayed for a predefined period of time;
   determining the determined image responsive to determining that the current wallpaper image has been displayed for the predefined period of time; and
   causing display of the determined image as a new wallpaper image, thereby replacing the current wallpaper image with the new wallpaper image.

7. The method of any of claims 1 to 6, wherein determining the locations of the visually significant regions comprises one or more of determining the location of a region having less than a predefined level of homogeneity, determining the location of a region having greater than a predefined energy level as determined by application of an energy function to a candidate image, or determining a tagged region of a candidate image.

8. The method of any of claims 1 to 7, wherein the at least one graphic item comprises one or more of an icon, a widget, an application interface, or a service interface.

9. An apparatus, comprising:

means for determining a display position for each of at least one graphic item;
means for determining, for each respective candidate image of at least one candidate image, locations of any visually significant regions in the respective candidate image; and
means for determining an image from the at least one candidate image at least in part by comparing the determined display positions of the at least one graphic item to the determined locations of the visually significant regions of the at least one candidate image.

10. The apparatus of claim 9 comprising means for performing a method according to any of claims 2 to 8.

11. The apparatus according to claim 9, wherein the apparatus comprises or is embodied on a mobile phone, the mobile phone comprising user interface circuitry and user interface software stored on at least one memory, wherein the user interface circuitry and user interface software are configured to:

facilitate user control of at least some functions of the mobile phone through use of a display; and
cause at least a portion of a user interface of the mobile phone to be displayed on the display to facilitate user control of at least some functions of the mobile phone.

12. A computer program for performing a method according to any of claims 1 to 8.


**Patentansprüche**

1. Verfahren, das die folgenden Schritte aufweist:

Bestimmen einer Anzeigeposition für jeweils mindestens ein Graphikelement (600);
Bestimmen für jedes jeweilige Kandidatenbild von mindestens einem Kandidatenbild von Orten irgendwelcher visuell bedeutender Bereiche im jeweiligen Kandidatenbild (6-10); und
mindestens teilweises Bestimmen eines Bilds aus dem mindestens einen Kandidatenbild durch Vergleichen der bestimmten Anzeigepositionen des mindestens einen Graphikelements mit den bestimmten Orten der visuell bedeutenden Bereiche des mindestens einen Kandidatenbilds (620).

2. Verfahren nach Anspruch 1, das ferner aufweist:

Bewirken einer Anzeige des bestimmten Bilds als ein Bildschirmhintergrundbild, das dem mindestens einen Graphikelement zugrundeliegt.

3. Verfahren nach Anspruch 2, wobei das Bildschirmhintergrundbild einen markierten Bereich aufweist und das mindestens eine Graphikelement ein Widget aufweist, wobei das Verfahren ferner aufweist:

Modifizieren des Inhalts des Widgets mindestens teilweise beruhend auf dem markierten Bereich.

4. Verfahren nach einem der Ansprüche 1 bis 3, das ferner aufweist: Bewirken, dass das bestimmte Bild einem Benutzer als ein Bildschirmhintergrundbild vorgeschlagen wird.

5. Verfahren nach einem der Ansprüche 1 bis 4, das ferner aufweist:

Ermitteln einer Änderung einer Position eines Graphikelements des mindestens einen Graphikelements; und wobei das Bestimmen des Bilds das Bestimmen des Bilds als Reaktion auf eine Ermittlung der Änderung der Position aufweist.

**6.** Verfahren nach einem der Ansprüche 1 bis 5, das ferner aufweist:

Bestimmen, dass ein gegenwärtiges Bildschirmhintergrundbild für eine vorgegebene Zeitspanne angezeigt worden ist;

Bestimmen des bestimmten Bilds als Reaktion auf das Bestimmen, dass das gegenwärtige Bildschirmhintergrundbild für die vorgegebene Zeitspanne angezeigt worden ist; und

Bewirken einer Anzeige des bestimmten Bilds als ein neues Bildschirmhintergrundbild, wodurch das gegenwärtige Bildschirmhintergrundbild durch das neue Bildschirmhintergrundbild ersetzt wird.

**7.** Verfahren nach einem der Ansprüche 1 bis 6, wobei das Bestimmen der Orte der visuell bedeutenden Bereiche das Bestimmen des Orts eines Bereichs, der weniger als einen vorgegebenen Homogenitätspegel aufweist, und/ oder das Bestimmen des Orts eines Bereichs, der mehr als einen vorgegebenen Energiepegel aufweist, der durch Anwendung einer Energiefunktion auf ein Kandidatenbild bestimmt wird, und/oder das Bestimmen eines markierten Bereichs eines Kandidatenbilds aufweist.

**8.** Verfahren nach einem der Ansprüche 1 bis 7, wobei das mindestens eine Graphikelement ein Icon und/oder ein Widget und/oder eine Anwendungsschnittstelle und/oder eine Dienstschnittstelle aufweist.

**9.** Vorrichtung, die Folgendes aufweist:

Mittel zum Bestimmen einer Anzeigeposition für jeweils mindestens ein Graphikelement;

Mittel zum Bestimmen für jedes jeweilige Kandidatenbild von mindestens einem Kandidatenbild von Orten irgendwelcher visuell bedeutender Bereiche im jeweiligen Kandidatenbild; und

Mittel zum teilweise Bestimmen eines Bilds aus dem mindestens einen Kandidatenbild durch Vergleichen der bestimmten Anzeigepositionen des mindestens einen Graphikelements mit den bestimmten Orten der visuell bedeutenden Bereiche des mindestens einen Kandidatenbilds.

**10.** Vorrichtung nach Anspruch 9, die Mittel zum Ausführen eines Verfahrens nach einem der Ansprüche 2 bis 8 aufweist.

**11.** Vorrichtung nach Anspruch 9, wobei die Vorrichtung ein Mobiltelefon aufweist oder auf einem Mobiltelefon ausgeführt ist, wobei das Mobiltelefon einen Benutzerschnittstellenschaltungskomplex und eine Benutzerschnittstellensoftware aufweist, die in mindestens einem Speicher gespeichert ist, wobei der Benutzerschnittstellenschaltungskomplex und die Benutzerschnittstellensoftware konfiguriert sind:

die Benutzersteuerung mindestens einige Funktionen des Mobiltelefons durch die Verwendung einer Anzeige zu erleichtern; und

zu bewirken, dass mindestens ein Abschnitt einer Benutzerschnittstelle des Mobiltelefons auf der Anzeige angezeigt wird, um die Benutzersteuerung mindestens einiger Funktionen des Mobiltelefons zu erleichtern.

**12.** Computerprogramm zum Ausführen eines Verfahrens nach einem der Ansprüche 1 bis 8.

**Revendications**

**1.** Procédé comprenant les étapes suivantes :

déterminer une position d'affichage pour chacun d'au moins un élément graphique (600) ;

déterminer, pour chaque image candidate respective d'au moins une image candidate, des emplacements de toutes régions visuellement significatives dans l'image candidate respective (610) ; et

déterminer une image à partir de l'au moins une image candidate au moins en partie en comparant les positions d'affichage déterminées de l'au moins un élément graphique aux emplacements déterminés des régions visuellement significatives de l'au moins une image candidate (620).

**2.** Procédé selon la revendication 1, comprenant en outre de provoquer l'affichage de l'image déterminée sous la forme d'une image de papier peint sous-jacente à l'au moins un élément graphique.

**3.** Procédé selon la revendication 2, dans lequel l'image de papier peint comprend une région marquée et l'au moins un élément graphique comprend un gadget logiciel, le procédé comprenant en outre l'étape suivants :

modifier le contenu du gadget logiciel sur la base, au moins en partie, de la région marquée.

4. Procédé selon l'une quelconque des revendications 1 à 3, comprenant en outre d'entraîner que l'image déterminée soit suggérée à un utilisateur pour être utilisée comme image de papier peint.

5. Procédé selon l'une quelconque des revendications 1 à 4, comprenant en outre l'étape suivants :

   détecter un changement de position d'un élément graphique de l'au moins un élément graphique ; et
   dans lequel la détermination de l'image comprend de déterminer l'image en réponse de la détection du changement de position.

6. Procédé selon l'une quelconque des revendications 1 à 5, comprenant en outre les étapes suivantes :

   déterminer qu'une image de papier peint courante a été affichée pendant une période de temps prédéfinie ;
   déterminer l'image déterminée en réponse à la détermination que l'image de papier peint courante a été affichée pendant la période de temps prédéfinie ; et
   entraîner l'affichage de l'image déterminée comme nouvelle image de papier peint, en remplaçant ainsi l'image de papier peint courante par la nouvelle image de papier peint.

7. Procédé selon l'une quelconque des revendications 1 à 6, dans lequel la détermination des emplacements des régions visuellement significatives comprend une ou plusieurs des étapes suivantes : déterminer l'emplacement d'une région ayant un niveau inférieur à un niveau prédéfini d'homogénéité, déterminer l'emplacement d'une région ayant un niveau supérieur à un niveau d'énergie prédéfini tel que déterminé par l'application d'une fonction d'énergie à une image candidate, ou déterminer une région marquée d'une image candidate.

8. Procédé selon l'une quelconque des revendications 1 à 7, dans lequel l'au moins un élément graphique comprend un ou plusieurs éléments parmi : une icône, un gadget logiciel, une interface d'application ou une interface de service.

9. Appareil comprenant :

   un moyen pour déterminer une position d'affichage pour chacun d'au moins un élément graphique ;
   un moyen pour déterminer, pour chaque image candidate respective d'au moins une image candidate, des emplacements de toutes régions visuellement significatives dans l'image candidate respective ; et
   un moyen pour déterminer une image à partir de l'au moins une image candidate au moins en partie en comparant les positions d'affichage déterminées de l'au moins un élément graphique aux emplacements déterminés des régions visuellement significatives de l'au moins une image candidate.

10. Appareil selon la revendication 9, comprenant un moyen pour exécuter un procédé selon l'une quelconque des revendications 2 à 8.

11. Appareil selon la revendication 9, où l'appareil comprend ou est intégré dans un téléphone mobile, le téléphone mobile comprenant des circuits d'interface utilisateur et un logiciel d'interface utilisateur stocké sur au moins une mémoire, où les circuits d'interface utilisateur et le logiciel d'interface utilisateur sont configurés pour :

   faciliter le contrôle par l'utilisateur d'au moins certaines fonctions du téléphone mobile par l'intermédiaire de l'utilisation d'un écran d'affichage ; et
   entraîner qu'au moins une partie d'une interface utilisateur du téléphone mobile soit affichée sur l'écran d'affichage pour faciliter le contrôle par l'utilisateur d'au moins certaines fonctions du téléphone mobile.

12. Programme informatique pour exécuter un procédé selon l'une quelconque des revendications 1 à 8.

APPARATUS

User
Interface — 116

110 — Processor

118 — Image
Determination
Circuitry

114 — Communication
Interface

112 — Memory

102

FIG. 1

## FIG. 2

FIG. 3

FIG. 4A

FIG. 4B

502   504                    506

FIG. 5A

FIG. 5B

Determining a display position for each of at least one graphic item ⟋⎯⎯ 600

Determining, for each respective candidate image of at least one candidate image, locations of any visually significant regions in the respective candidate image ⟋⎯⎯ 610

Determining an image from the at least one candidate image at least in part by comparing the determined display positions of the at least one graphic item to the determined locations of the visually significant regions of the at least one candidate image ⟋⎯⎯ 620

Causing display of the determined image as a wallpaper image underlying the at least one graphic item ⟋⎯⎯ 630

# FIG. 6

EP 2 423 882 B1

```
┌─────────────────────────────────────────────────────────────┐
│ Determining information from content of a tagged region of a │────700
│ wallpaper image                                              │
└─────────────────────────────────────────────────────────────┘
                              │
                              ▼
┌─────────────────────────────────────────────────────────────┐
│ Modifying content of a widget overlying the wallpaper image  │────710
│ based at least in part on the information determined from the │
│ content of the tagged region                                 │
└─────────────────────────────────────────────────────────────┘
```

## FIG. 7

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2173090 A1
- EP 2173090 A